# EUROPÄISCHE PATENTSCHRIFT

(11) **EP 4 115 101 B1**
(45) Veröffentlichungstag und Bekanntmachung des Hinweises auf die Patenterteilung: **23.04.2025**
(21) Anmeldenummer: 21709954.8
(22) Anmeldetag: 03.03.2021
(51) Int. Cl.: F16K 7/06, F16K 27/02

(54) **QUETSCHVENTIL**
PINCH VALVE
VANNE À MANCHON

(30) Priorität: 06.03.2020 DE 102020106149
(43) Veröffentlichungstag der Anmeldung: 11.01.2023
(73) Patentinhaber: GEMÜ Gebr. Müller Apparatebau GmbH & Co. Kommanditgesellschaft, 74653 Ingelfingen (DE)
(72) Erfinder: BAUMGÄRTNER, Michael, 74677 Dörzbach (DE); LECHMANN, Vadim, 74653 Künzelsau (DE); BRABSCHE, Alexander, 74639 Pfahlbach (DE)
(74) Vertreter: DREISS Patentanwälte PartG mbB
(86) Internationale Anmeldenummer: PCT/EP2021/055280
(87) Internationale Veröffentlichungsnummer: WO 2021/175900

(56) Entgegenhaltungen:
- US-A- 4 978 100
- US-A1- 2001 019 117
- US-A1- 2009 101 861

## Beschreibung

Die Erfindung betrifft ein Quetschventil zum Quetschen eines Schlauchabschnitts.

Schlauchquetschventile zum Zusammendrücken von Schlauchabschnitten sind allgemein bekannt.

Beispielsweise offenbart US 2009/0101861 A1 ein Ventil zum Drosseln und Verschließen von Kunststoffrohren, umfassend eine Basis mit einer Fläche zum Halten eines Kunststoffrohrs, zwei sich von der Basis erstreckende Seitenführungen, ein mit einem Drosselelement versehenes Oberteil und Mittel zum Anheben und Absenken des Drosselelements auf einen Sitz. Eine der seitlichen Führungen ist schwenkbar mit der Basis verbunden und kann mit dem Oberteil verbunden werden. Das Oberteil hat eine Verzweigung zur Aufnahme der Führung, wobei ein Sitz an der Verzweigung vorgesehen ist, um einen Kopf auf der Seitenführung zu halten. Das Ventil kann um ein Kunststoffrohr gelegt und das Drosselelement so positioniert werden, dass der Durchfluss durch das Rohr eingestellt wird. Um das Ventil aus dem Rohr zu entfernen, wird durch Niederdrücken des Oberteils der Kopf der Seitenführung von seinem Sitz gelöst und das Ventil geöffnet.

Aus der US 2001/0019117 A1 ist ein Quetschventil mit einem entlang einer Stellachse beweglichen Gegenlagerabschnitt bekannt.

Aus der US 4,978,100 A ist eine Klemmvorrichtung für einen Feuerwehrschlauch mit einer rotierbaren Backe als Gegenabschnitt für einen Kompressor bekannt, wobei der Feuerwehrschlauch entlang der Stellachse des Kompressors einführbar ist.

Das der Erfindung zugrundeliegende Problem wird durch ein Quetschventil gemäß dem Anspruch 1 gelöst. Vorteilhafte Weiterbildungen finden sich in den Unteransprüchen, der nachfolgenden Beschreibung sowie in der Zeichnung.

Ein Aspekt der Beschreibung betrifft ein Quetschventil, welches umfasst: einen Grundkörper mit einem Aufnahmeraum für einen Schlauchabschnitt, wobei der Grundkörper eine laterale Öffnung, die in den Aufnahmeraum führt, umfasst; ein am Grundkörper beweglich befestigtes Verschlusselement, welches relativ zu dem Grundkörper zwischen einer ersten Position, in der das Verschlusselement die laterale Öffnung des Grundkörpers zumindest abschnittsweise verschließt, und einer zweiten Position, in der das Verschlusselement eine Einbringöffnung für den Schlauchabschnitt freigibt, beweglich ist; und einen Gegenlagerabschnitt für einen entlang einer Stellachse beweglichen Kompressor.

Ein seitliches Einlegen bzw. Entfernen des Schlauchabschnitts über die Einbringöffnung wird ermöglicht. Vorteilhaft ermöglicht das Quetschventil eine Entkopplung der Festlegung des Schlauchabschnitts in dem Quetschventil von einer Befestigung des Quetschventils selbst und von einer Anordnung eines Antriebs. Insbesondere kann ein Tausch eines Antriebs oder die Demontage für einen Wechsel des Schlauchabschnitts entfallen. Die Handhabung des Quetschventils wird somit verbessert.

Die richtige Kompression der Schlauchleitung bzw. des Schlauchabschnitts wird zuverlässig erreicht, wenn der Schlauchabschnitt richtig zwischen dem Kompressor und dem Gegenlagerabschnitt positioniert ist. Das heißt, wenn der Schlauchabschnitt nicht richtig im Aufnahmeraum positioniert ist, kann das Prozessfluid im Schlauch ungehindert fließen, unabhängig vom Zustand (z.B. offen oder geschlossen) des Quetschventils. Darüber hinaus kann in einem solchen Fall der Regler eines Fluidsteuerungssystems unter der falschen Annahme, dass der Fluss durch den Schlauch bei geschlossenem Quetschventil behindert wird, weiterarbeiten. In diesem Fall ist die Steuerung des Prozessfluids durch das System beeinträchtigt. Solange der Schlauch nicht ordnungsgemäß im Schlauchschlitz bzw. dem Aufnahmeraum positioniert ist, kann das Fluidsteuerungssystem nicht einwandfrei funktionieren. Das Verschlusselement behebt die voran genannten Probleme und erhöht die Prozesssicherheit.

Das Verschlusselement ist um eine Rotationsachse rotierbar an dem Grundkörper befestigt ist, wobei die Rotationsachse lotrecht und beabstandet zu der Stellachse verläuft, sodass der Schlauchabschnitt lotrecht zur Stellachse entnehmbar und/oder zuführbar ist. Alternativ ist das Verschlusselement schubladenförmig ausgeführt und umfasst einen Führungsabschnitt, der in einem diesen aufnehmenden Führungsabschnitt des Grundkörpers aufgenommen ist, sodass das Verschlusselement linear geführt ist.

Vorteilhaft sind der Grundkörper und das Verschlusselement damit in einem Scharnierbereich miteinander verbunden. Damit ist es möglich, dass das Verschlusselement mit dem vom Verschlusselement gehaltenen Schlauchabschnitt klappbar ist. Das bedeutet, dass der Schlauchabschnitt kontrolliert in den Quetschraum eingebracht und aus diesem herausführbar ist. Die Handhabung des Quetschventils verbessert sich. Gleichzeitig wird durch die kontrollierte Aufnahme des Schlauchabschnitts die Prozesssicherheit erhöht.

Damit kann der Schlauchabschnitt im Wartungsfall vorteilhaft lotrecht zur Stellachse entnommen bzw. zugeführt werden. Eine weitere unnötige Krümmung des Schlauchabschnitts wird vermieden.

Ein vorteilhaftes Beispiel zeichnet sich dadurch aus, dass ein Öffnungswinkel zwischen der ersten und der zweiten Position des Verschlusselements auf einen Bereich zwischen 40° und 80°, insbesondere auf einen Bereich zwischen 50° und 60°, begrenzt ist.

Dieser Bereich des Öffnungswinkels ermöglicht für das Betriebspersonal einen vereinfachten Wechsel des Schlauchabschnitts, da durch das so halb geöffnete Verschlusselement der Schlauchabschnitt gesichert wird und damit einfach wechselbar ist. Darüber hinaus dient das Verschlusselement damit als Schutzmaßnahme gegen ein ungewolltes Eingreifen in den Bereich des Kompressors.

Erfindungsgemäß, stellt das Verschlusselement einen Gegenlagerabschnitt für einen entlang der Stellachse beweglichen Kompressor bereit.

Die Bereitstellung des Gegenlagerabschnitts mittels des Verschlusselements vereinfacht die Handhabung beispielsweise dahingehend, als dass mit einem Handgriff die Einbringöffnung freiliegt und ein Tausch des Schlauchabschnitts ermöglicht wird.

Ein vorteilhaftes Beispiel zeichnet sich dadurch aus, dass das Verschlusselement und/oder der Gegenlagerabschnitt wenigstens einen Anschlagbereich zur Begrenzung einer Bewegung des Kompressors entlang der Stellachse und in Richtung des Gegenlagerabschnitts umfasst.

Der Anschlagbereich ermöglicht vorteilhaft eine kontrollierte Verpressung des Schlauchabschnitts, da eine durch den Anschlagbereich definierte Position durch den Kompressor nicht überschritten wird.

Ein vorteilhaftes Beispiel zeichnet sich dadurch aus, dass das Verschlusselement lösbar mit dem Grundkörper verbunden ist.

Durch die lösbare Verbindung können Rüstzeiten bei einem Anwendungswechsel, was beispielsweise eine Änderung des Typs des Schlauchabschnitts, eine Änderung der Kompressorgeometrie und/oder eine Änderung der Gegenlagergeometrie erfordert, reduziert werden. Eine Demontage des Antriebs, eine Lösung der Befestigung des Quetschventils oder ein Tausch des gesamten Quetschventils können entfallen.

Gleichzeitig führt eine so mögliche Anpassung der Gegenlagergeometrie durch das Bedien- bzw. Wartungspersonal dazu, dass der zu quetschende Schlauchabschnitt geschont wird. Damit ergibt sich eine verringerte Schädigungswahrscheinlichkeit, womit auch die Abgabe von Partikeln des Schlauchabschnitts an das gestellte Prozessfluid verringert. Es ergibt sich also eine erhöhte Prozesssicherheit.

Ein vorteilhaftes Beispiel zeichnet sich dadurch aus, dass der Gegenlagerabschnitt und das Verschlusselement einstückig ausgebildet sind.

Vorteilhaft wird die Konstruktion des Quetschventils vereinfacht, wobei bei einem Tausch der Gegenlagerabschnitt gemeinsam mit der Klappe durchgeführt wird. Insbesondere ergeben sich Freiheitsgrade bei der Kennzeichnung des Verschlusselements, um einen vorbestimmten Einsatzweck dem Betriebspersonal anzuzeigen. Damit wird die Bedien- und Wartbarkeit verbessert.

Ein vorteilhaftes Beispiel zeichnet sich dadurch aus, dass der Gegenlagerabschnitt lösbar mit dem Verschlusselement verbunden ist.

Damit wird ein modulares Quetschventil geschaffen und ermöglicht, dass das Verschlusselement für den nächsten Einsatz verbleibt und lediglich der Gegenlagerabschnitt getauscht wird. Dies kann zu reduzierten Fertigungskosten bei gleichzeitig erhöhten Freiheitsgraden in der Anwendung führen.

Ein vorteilhaftes Beispiel zeichnet sich dadurch aus, dass eine dem Gegenlagerabschnitt gegenüberliegende Anlagekontur des Verschlusselements und eine innere Anlagekontur des Grundkörpers aneinander anliegen, wenn sich das Verschlusselement in der ersten Position befindet.

Drückt der Kompressor auf den Schlauchabschnitt oder auf den Anschlagbereich, so wird eine Kraft über das Verschlusselement an den Grundkörper übertragen. Die Übertragung der Kraft mittels der Anlageflächen entlastet die Art der beweglich ausgebildeten Befestigung zwischen Verschlusselement und Grundkörper. Vorteilhaft wird eine Kraftübertragung also entlang und parallel zu der Stellachse verbessert. Insbesondere profitiert das Scharnier, da die Kräfte bevorzugt über die radial weiter innenliegenden Anlagekonturen übertragen werden.

Ein vorteilhaftes Beispiel zeichnet sich dadurch aus, dass ein an dem Grundkörper beweglich befestigtes Verriegelungselement relativ zum Grundkörper zwischen einer Freigabeposition, in der das Verriegelungselement eine Bewegung des Verschlusselements in dessen zweite Position erlaubt, und einer Verriegelungsposition, in der das Verrieglungselement eine Bewegung des Verschlusselements aus dessen erster Position heraus begrenzt, beweglich ist.

Das Verriegelungselement verhindert, dass der Schlauchabschnitt während des Betriebs des Quetschventils ungewollt entfernt wird.

Ein vorteilhaftes Beispiel zeichnet sich dadurch aus, dass das Verriegelungselement um die Stellachse rotierbar gelagert ist, dass ein Kragen des Verriegelungselements in der Verriegelungsposition einen distalen Abschnitt des Verschlusselements festlegt, und dass eine Ausnehmung des Kragens des Verriegelungselements in der Freigabeposition den distalen Abschnitt des Verschlusselements zur Bewegung des Verschlusselements in die zweite Position freigibt.

Vorteilhaft wird damit ein einfach zu bedienbares Verriegelungselement bereitgestellt, dessen Ausnehmung eine optische Anzeige für die Verriegelung oder Freigabe darstellt.

Ein vorteilhaftes Beispiel zeichnet sich dadurch aus, dass der Kompressor lösbar an einer sich entlang der Stellachse erstreckenden Ventilstange befestigt ist.

Vorteilhaft ist dadurch eine Anpassung der Kompressorgeometrie an unterschiedliche Schlauchkonfigurationen möglich.

Ein vorteilhaftes Beispiel zeichnet sich dadurch aus, dass ein Befestigungsabschnitt des Grundkörpers sich radial außerhalb einer Durchgangsöffnung für eine Ventilstange befindet.

In Verbindung mit dem Schlauchwechselmechanismus stellt dieser Befestigungsabschnitt eine vorteilhaft eine Rein-/Grauraumabtrennung bereit. Im Reinraum befindet sich der Teil des Quetschventils zur Aufnahme des Schlauches. Ein Antrieb hingegen kann im Grauraum angeordnet werden. Damit wird der Reinigungsaufwand reduziert. Gleichzeitig reduzieren sich die Anforderungen an den Antrieb.

Ein vorteilhaftes Beispiel zeichnet sich dadurch aus, dass der Gegenlagerabschnitt in einer Öffnung mündet, welche einen kleineren Durchmesser hat als ein Innendurchmesser des Gegenlagerabschnitts.

Vorteilhaft fixiert der Gegenlagerabschnitt durch die verjüngte Öffnung den Schlauchabschnitt und verhindert ein ungewolltes Herausfallen des Schlauchabschnitts.

In der Zeichnung zeigen:
- Figur 1: eine perspektivische Darstellung eines Quetschventils;
- Figuren 2a, 3a, 6a, 7a: (Figur 7a zeigt ein Beispiel, das nicht der beanspruchten Erfindung entspricht) das Quetschventil mit einem Verschlusselement in einer zweiten Position;
- Figuren 2b, 3b, 6b, 7b: (Figur 7b zeigt ein Beispiel, das nicht der beanspruchten Erfindung entspricht) das Quetschventil mit dem Verschlusselement in einer ersten Position;
- Figur 4: einen Schnitt des Quetschventils ohne ein Verschlusselement;
- Figur 5: eine Seitenansicht des Quetschventils ohne das Verschlusselement;
- Figur 8: das Verschlusselement mit unterschiedlichen Einsätzen;
- Figur 9: eine Mehrzahl von Kompressor-Gegenlager-Paaren.

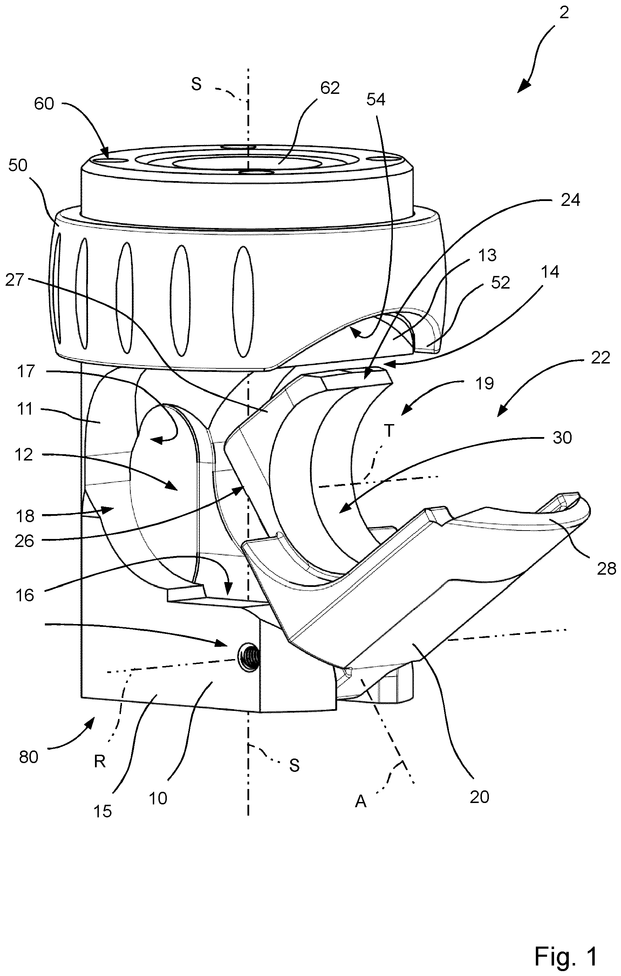

Figur 1 zeigt eine perspektivische Darstellung eines Quetschventils 2. Ein Grundkörper 10 umfasst einen Aufnahmeraum 12 für einen Schlauchabschnitt, in dem ein zu stellende Prozessmedium fließt. Der Grundkörper 10 umfasst zwei sich gegenüberliegende Öffnungen 18 und 19 und eine laterale Öffnung 14. Die sich gegenüberliegenden Öffnungen 18 und 19 bilden eine Durchgangsöffnung und dienen zur Aufnahme des sich entlang einer Schlauchachse T erstreckenden Schlauchabschnitts. Die laterale Öffnung 14 führt von außen in den Aufnahmeraum 12. Die laterale Öffnung 14 dient zur Entnahme und Zuführung des Schlauchabschnitts. Der Aufnahmeraum 12 ist also durch den Grundkörper 10 begrenzt. Der Grundkörper 10 ist U-förmig ausgebildet.

Ein Gegenlagerabschnitt 30 ist vorgesehen und dient als Gegenlager für einen entlang einer Stellachse S beweglichen Kompressor.

Ein am Grundkörper 10 beweglich befestigtes, klappenartiges Verschlusselement 20 ist relativ zu dem Grundkörper 10 zwischen einer ersten, in Figur 1 nicht gezeigten Position, in der das Verschlusselement 20 die laterale Öffnung 14 des Grundkörpers 10 zumindest abschnittsweise verschließt, und einer zweiten in Figur 1 gezeigten Position, in der das Verschlusselement 20 eine Einbringöffnung 22 für den Schlauchabschnitt freigibt, beweglich ist. Die Einbringöffnung 22 ist auch als Einbring- und Entnahmeöffnung bezeichenbar.

Der Strom des in dem in das Quetschventil 2 eingebrachten Schlauchabschnitts fließenden Prozessfluids wird beeinflusst, indem der Kompressor entlang der Stellachse von einer Seite auf den Schlauchabschnitt drückt. Der Gegenlagerabschnitt 30 ist feststehend in Kontakt mit der dem Kompressor gegenüberliegenden Seite des Schlauchabschnitts. Drückt nun der Kompressor auf den flexiblen Schlauchabschnitt, so verringert sich der innere Durchmesser des Schlauchabschnitts und begrenzt damit den Fluss des Prozessfluids. Der Gegenlagerabschnitt 30 ist auch als Kontaktabschnitt bezeichenbar.

Der zumindest abschnittsweise U-förmige Grundkörper 10 umfasst einen lateralen Verbindungsabschnitt 11, der sich im Wesentlichen parallel und beabstandet zur Stellachse S erstreckt. Zwei voneinander beabstandete, sich im Wesentlichen lotrecht zur Stellachse S erstreckende Abschnitte 13 und 15, welche von dem Verbindungsabschnitt 11 abragen. Der Verbindungsabschnitt 11 und die von dem Verbindungsabschnitt 11 abragenden Abschnitte 13 und 15 begrenzen den Aufnahmeraum 12.

Die laterale Öffnung 14 wird von dem Grundkörper 10, insbesondere von den distalen Enden der Abschnitte 13 und 15 begrenzt. Die Einbringöffnung 22 wird gemeinsam von dem Verschlusselement 20 und dem Grundkörper 10 bzw. den am Grundkörper 10 angeordneten Elementen begrenzt.

Das Verschlusselement 20 ist um eine Rotationsachse R rotierbar an einem distalen Bereich des Abschnitts 10 des Grundkörpers 10 befestigt. Die Rotationsachse R verläuft lotrecht und beabstandet zu der Stellachse S.

Erfindungsgemäß stellt das Verschlusselement 20 den Gegenlagerabschnitt 30 bereit. Im gezeigten Beispiel ist der Gegenlagerabschnitt 30 einstückig mit dem Verschlusselement 20 ausgebildet.

Durch die einstückige Ausbildung stellt das Verschlusselement 20 die Aufnahme für den Schlauchabschnitt bereit. Das bedeutet, dass das Verschlusselement 20 den Schlauchabschnitt zwischen einer in Figur 1 gezeigten Entnahme- bzw. Einbringposition und einer Betriebsposition bewegt. Eine sich entlang der Rotationsachse R erstreckende Schraubverbindung ermöglicht einen Austausch des Verschlusselements 30. Das Verschlusselement 20 ist also lösbar mit dem Grundkörper 10 verbunden.

In einem in Figur 1 nicht gezeigten Beispiel des Quetschventils 2 ist der Gegenlagerabschnitt 30 lösbar mit dem Verschlusselement 20 verbunden. Beispielsweise wird der separat ausgeführte Gegenlagerabschnitt 30 entlang einer lotrecht und beabstandet zur Rotationsachse R verlaufenden Achse A mit dem Verschlusselement verbunden. Die Verbindung zwischen dem Gegenlagerabschnitt 30 und dem Verschlusselement 20 ist beispielsweise als Schwalbenschwanzverbindung ausgeführt.

Das Verschlusselement 20 und/oder der Gegenlagerabschnitt 30 umfassen wenigstens einen Anschlagbereich 24 zur Begrenzung einer Bewegung des Kompressors entlang der Stellachse S und in Richtung des Gegenlagerabschnitts 30.

Eine dem Gegenlagerabschnitt 30 gegenüberliegende Anlagekontur 26 des Verschlusselements 20 und eine innere Anlagekontur 16 des Grundkörpers 10 liegen aneinander an, wenn sich das Verschlusselement 20 in der ersten Position befindet. Die Anlagekontur 16 umfasst beispielsweise eine Zylinderinnenfläche mit einer gedachten Zylinderachse, welche lotrecht und durch die Stellachse S verläuft. Entsprechend umfasst die Anlagekontur 26 eine Zylinderaußenfläche mit einer gedachten Zylinderachse, welche, wenn sich das Verschlusselement 20 in der ersten Position befindet, lotrecht und durch die Stellachse S verläuft.

Des Weiteren umfasst das Verschlusselement 20 eine in den Aufnahmeraum 12 ragende Anlagekontur 27, welche, wenn sich das Verschlusselement 20 in der ersten Position befindet, an einer Anlagekontur 17 des Verbindungsabschnitts 11 anliegt.

Ein an dem Grundkörper 10 beweglich befestigtes Verriegelungselement 50 ist relativ zum Grundkörper 10 zwischen einer Freigabeposition, in der das Verriegelungselement 50 eine Bewegung des Verschlusselements 20 in dessen zweite Position erlaubt, und einer Verriegelungsposition, in der das Verrieglungselement 50 eine Bewegung des Verschlusselements 20 aus dessen erster Position heraus begrenzt, beweglich. Das Verriegelungselement 50 ist um die Stellachse S rotierbar gelagert. Ein in Richtung des Aufnahmeraums 12 abragender Kragen 52 des Verriegelungselements 50 legt in der Verriegelungsposition einen distalen Abschnitt 28 des Verschlusselements 20 fest. Eine Ausnehmung 54 des Kragens 52 des Verriegelungselements 50 gibt in der Freigabeposition den distalen Abschnitt 28 des Verschlusselements 20 zur Bewegung des Verschlusselements 20 in die zweite Position frei. Ein Verdrehwinkel des Verriegelungselements 50 liegt bei im Wesentlichen 90°. In den Endpositionen wird das Verriegelungselement 50 gegen unbeabsichtigtes Verdrehen durch eine Arretierung gesichert.

Ein Befestigungsabschnitt 60 des Grundkörpers 10 befindet sich radial außerhalb einer Durchgangsöffnung 62 für eine Ventilstange. Der Befestigungsabschnitt 60 wird in Figur 1 durch Innengewinde bereitgestellt, welche in distalen Öffnungen münden.

Ein weiterer Befestigungsabschnitt 80 befindet auf der der Durchgangsöffnung 62 gegenüberliegenden Seite des Quetschventils 2 und wird beispielsweise durch Innengewinde bereitgestellt, die in distalen Öffnungen münden.

In einem Beispiel sind der Grundkörper 10, das Verschlusselement 20, der Gegenlagerabschnitt 30 und das Verriegelungselement 50 aus einem jeweiligen Kunststoff gefertigt. In einem anderen Beispiel sind die vorgenannten Komponenten aus einer jeweiligen Metalllegierung gefertigt. In einem weiteren Beispiel sind die vorgenannten Komponenten aus einer Metalllegierung oder einem Kunststoff gefertigt.

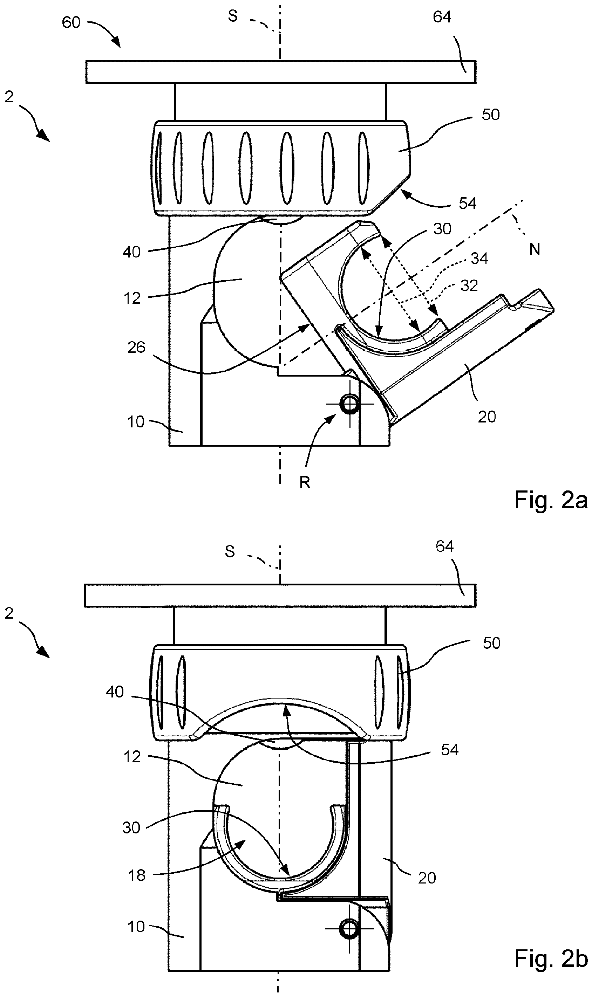

Figuren 2a und 2b zeigen das Quetschventil 2 aus Figur 1 mit dem Verschlusselement 20 in unterschiedlichen Positionen, wobei die Schlauchachse lotrecht zur Zeichenebene verläuft.

Der Gegenlagerabschnitt 30 mündet in einer Öffnung, welche einen kleineren zur Schlauchachse lotrecht verlaufenden Durchmesser 32 hat als ein lotrecht zur Schlauchachse verlaufender Innendurchmesser 34 des Gegenlagerabschnitts 30.

Der Befestigungsabschnitt 60 des Quetschventils 2 umfasst einen Flansch 64, in dem sich parallel zur Stellachse S erstreckende Innengewinde ausgeführt sind.

Ein Öffnungswinkel zwischen der ersten und der zweiten Position des Verschlusselements 20 ist auf einen Bereich zwischen 40° und 80°, insbesondere auf einen Bereich zwischen 50° und 60°, begrenzt. Der Öffnungswinkel ergibt sich beispielsweise zwischen einer Neigungsachse N des Verschlusselements 20 und der Stellachse S.

In der ersten Position, welche in Figur 2b gezeigt ist, ist das Verriegelungselement 50 so aus dessen Freigabeposition heraus in die Verriegelungsposition rotiert, dass die konkav gewölbte Ausnehmung 54 die Öffnung 18 des Aufnahmeraums für den Schlauchabschnitt optisch begrenzt. Das bedeutet, dass in der Verriegelungsposition der optische Eindruck entsteht, dass die Ausnehmung 54 eine gedachte vergrößerte Außenkontur des Schlauchabschnitts begrenzt.

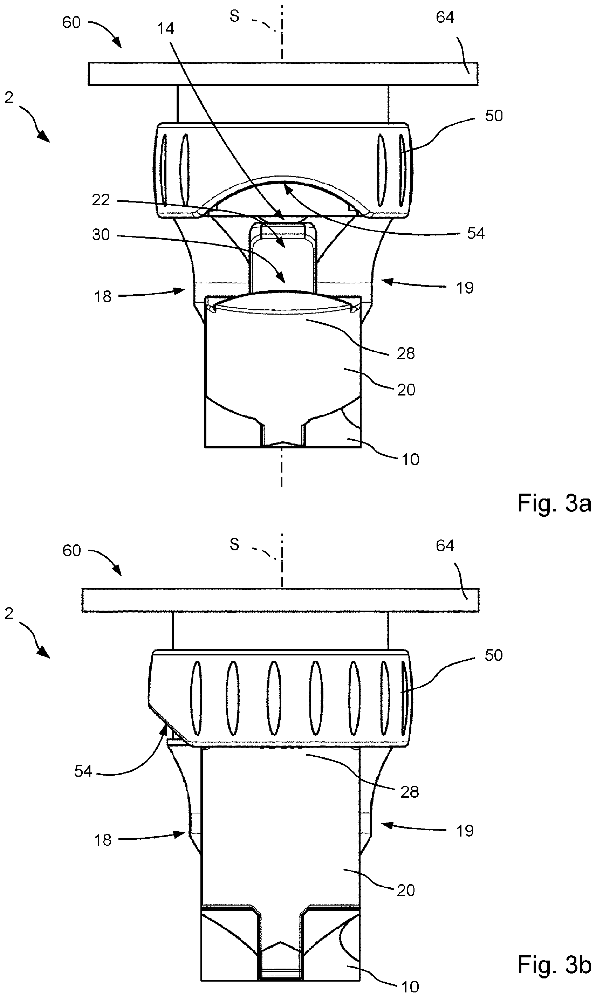

Figuren 3a und 3b zeigen das Quetschventil 2 aus Figur 1 mit dem Verschlusselement 20 in unterschiedlichen Positionen, wobei die Schlauchachse parallel zur Zeichenebene verläuft.

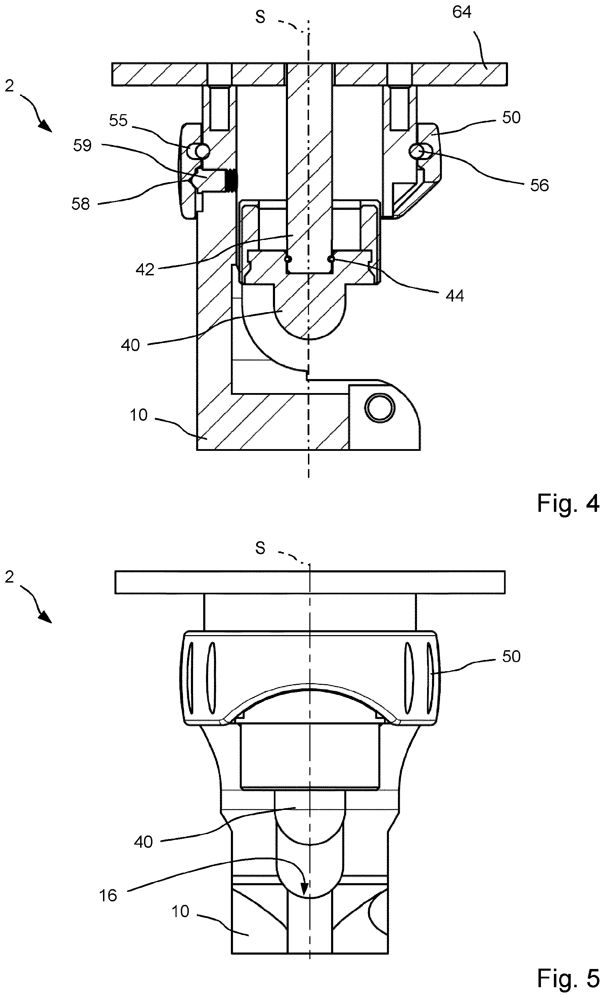

Figur 4 zeigt einen Schnitt des Quetschventils 2 ohne das Verschlusselement. Ohne das angebrachte Verschlusselement lässt sich der Kompressor 40 tauschen. Der Kompressor 40 ist hierzu lösbar an einem distalen Ende der sich entlang der Stellachse S erstreckenden Ventilstange 42 befestigt. Am distalen Ende der Ventilstange 42 ist umfangsseitig ein Runddrahtsprengring 44 in einer Umfangsnut aufgenommen. Der Kompressor 40 umfasst eine Innennut, in welcher der Runddrahtsprengring 44 aufgenommen ist. Zieht man an dem Kompressor 40 mit einer Handkraft, so zieht sich der Runddrahtsprengring 44 zusammen und gibt den Kompressor 40 frei.

Das Verriegelungselement 50 umfasst eine Innennut 55, in welche ein Ring 56, welcher in einer Außennut des Grundkörpers 10 angeordnet ist, eingreift. Damit wird das Verriegelungselement 50 in eine Rotationsbewegung um die Stellachse S gezwungen.

Des Weiteren umfasst das Verriegelungselement 50 eine innere Rastausnehmung 58, welche bei der Verdrehung des Verriegelungselements 50 in vom Grundkörper 10 abragende wenigstens zwei Rastelemente 59 einrastet. Die wenigstens zwei Rastelemente 59 definieren die Verriegelungsposition und die Freigabeposition des Verriegelungselements 50.

Figur 5 zeigt eine Seitenansicht des Quetschventils 2 ohne das Verschlusselement 20. Die Anlagekontur 16 für das Anliegen des Verschlusselements weist eine innenzylindrische Anlagefläche auf.

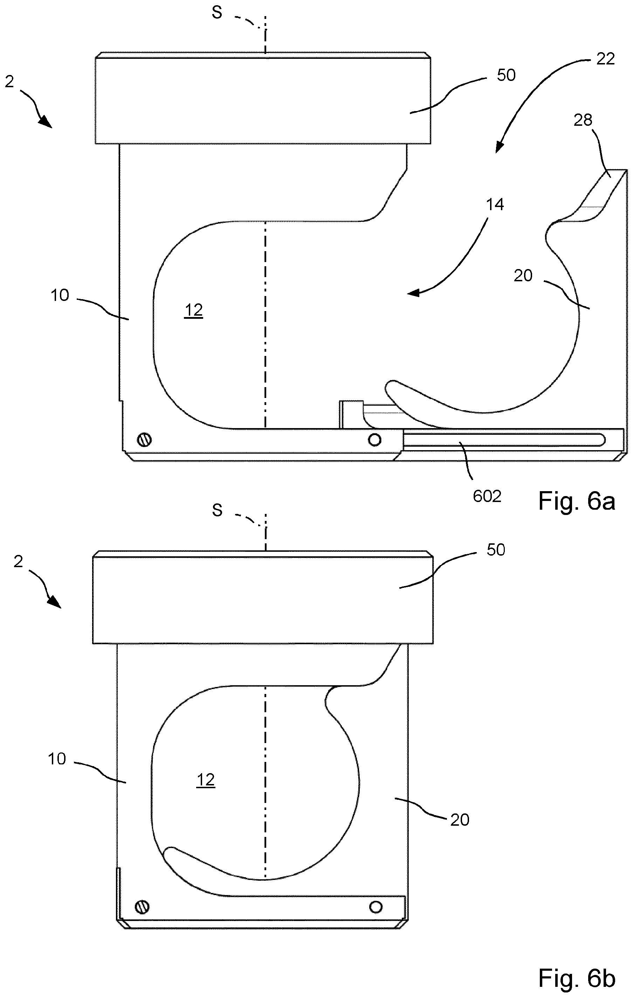

Figuren 6a und 6b zeigen ein Beispiel des Quetschventils 2 mit dem Verschlusselement 20 in unterschiedlichen Positionen. Das Verschlusselement 20 ist schubladenartig ausgeführt und umfasst einen Führungsabschnitt 602, der in einem diesen aufnehmenden Führungsabschnitt des Grundkörpers 10 aufgenommen ist. Damit ist das Verschlusselement 20 linear geführt.

Die in Figur 6a gezeigte zweite Position ermöglicht das Einbringen des Schlauchabschnitts über die Einbringöffnung 22. Die in Figur 6b gezeigte erste Position des Verschlusselements 20 verschließt die Öffnung 14 des Grundkörpers 10.

Das Verriegelungselement 50 kann wie in den vorangehenden Beispielen ausgeführt sein. In einem anderen Beispiel wird das Verriegelungselement 50 parallel zur Stellachse S verschoben und verriegelt das Verschlusselement 20.

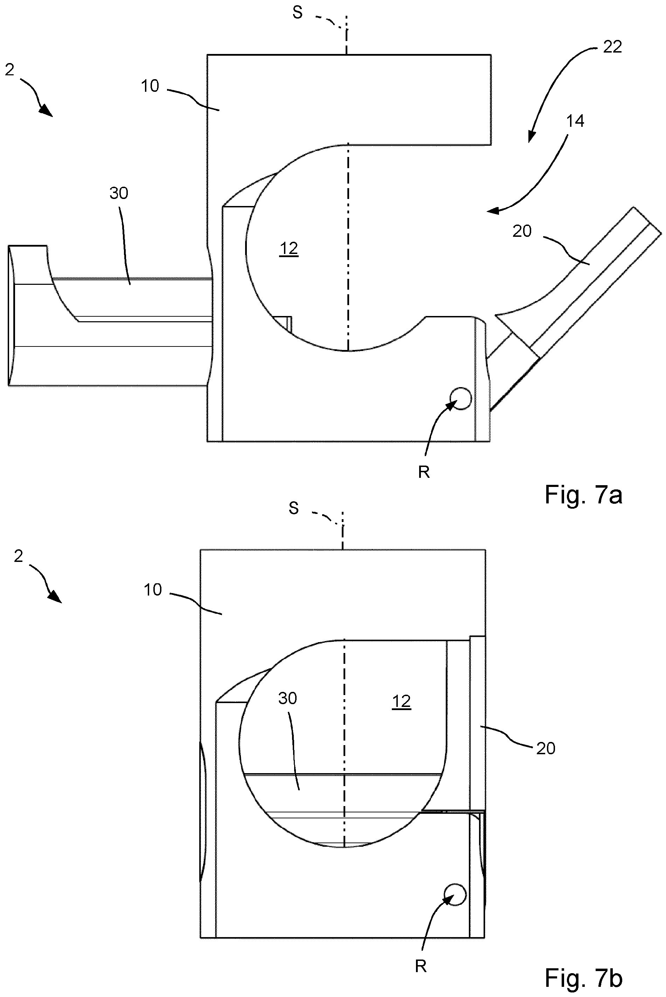

Figuren 7a und 7b zeigen ein nicht erfindungsgemäßes Beispiel des Quetschventils 2 mit dem Verschlusselement 20 in unterschiedlichen Positionen. In diesem Beispiel sind das Verschlusselement 20 und der Gegenlagerabschnitt 30 getrennt ausgeführt und jeweils beweglich zu dem Grundkörper 10 festgelegt. Das Verschlusselement 20 ist um die Rotationsachse R rotierbar.

Der Gegenlagerabschnitt 30 ist durch eine Durchgangsöffnung in dem Grundkörper 10 in den Aufnahmeraum 12 einschiebbar gelagert.

In einem nicht gezeigten Beispiel umfasst das Quetschventil 2 eine Mehrzahl von Gegenlagerabschnitten, welche insbesondere in der ersten Position des Verschlusselements 20 beabstandet voneinander entlang der Stellachse S angeordnet sind. Ein dem jeweiligen Gegenlagerabschnitt zugeordneter Kompressor bewegt sich entlang der gemeinsamen Stellachse S. Selbstverständlich können die Kompressor-Gegenlagerabschnitt-Paare auch versetzt zueinander angeordnet werden. In einem Beispiel werden die Mehrzahl von Kompressoren mittels eines einzigen Antriebs angetrieben, wobei die Mehrzahl von Kompressoren mittels lateraler Kraftübertragungsabschnitte, die sich parallel aber beabstandet zur Zustellachse S erstrecken, miteinander verbunden sind. Vorteilhaft können hierdurch mehrere Schlauchabschnitte mittels eines einzigen Quetschventils betrieben werden.

In einem nicht gezeigten Beispiel werden mehrere Verschlusselemente 20 eines oder mehrerer Quetschventile 2 mittels eines oder mehrerer Verbindungselemente so miteinander verbunden, dass die Verschlusselemente 20 gemeinsam zwischen der ersten und der zweiten Position bewegbar sind. Vorteilhaft können damit mehrere Verschlusselemente 20, welche eine jeweilige Einbringöffnung freigeben, gleichzeitig bedient werden.

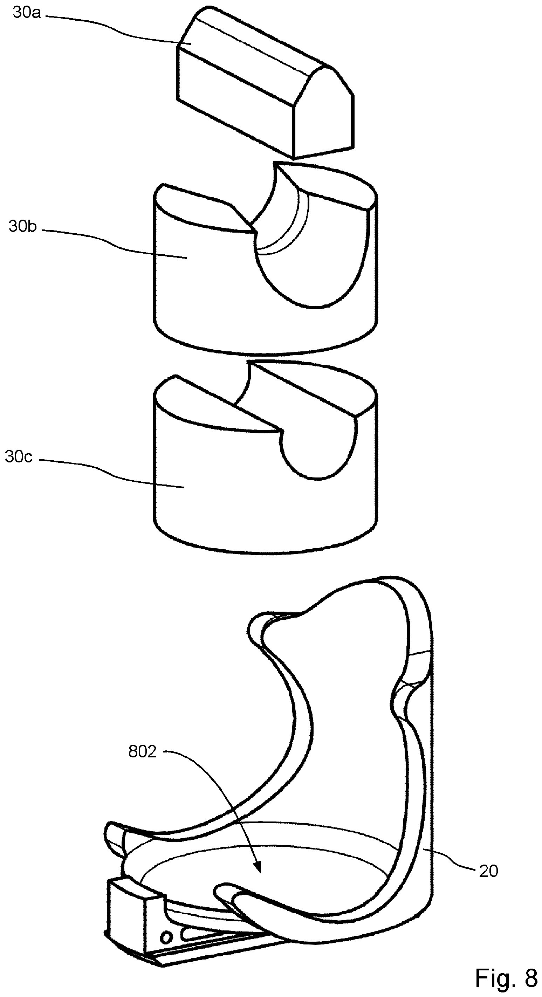

Figur 8 zeigt das Verschlusselement 20 aus den Figuren 6a und 6b mit unterschiedlichen Einsätzen, die als jeweiliger Gegenlagerabschnitt 30a, 30b, 30c für den Kompressor dienen. Ein Aufnahmeabschnitt 802 des Verschlusselements 20 nimmt einen der Gegenlagerabschnitte 30a, 30b, 30c auf.

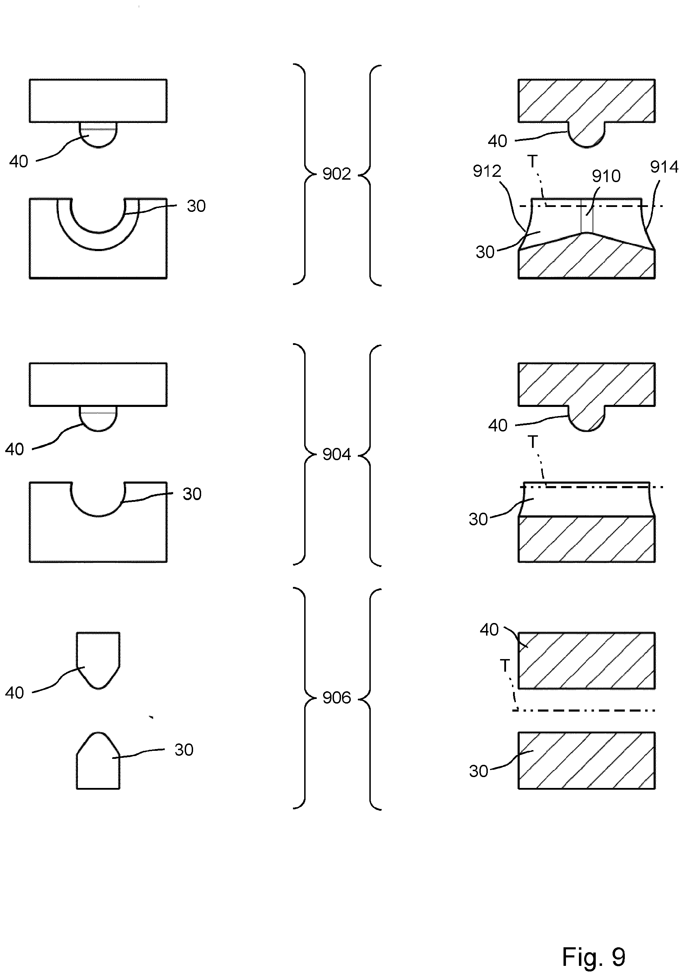

Figur 9 zeigt eine Mehrzahl von Kompressor-Gegenlager-Paaren 902, 904, 906, wobei linkerhand die Schlauchmittenachse T lotrecht zur Zeichenebene verläuft und rechterhand ein Schnitt entlang der Schlauchmittenachse T gezeigt ist.

Das Kompressor-Gegenlager-Paar 902 umfasst den halbsphärischen Kompressor 40. Der Gegenlagerabschnitt 30 umfasst eine im Wesentlichen kreisringförmige, dem Kompressor 40 gegenüberliegende Gegenfläche 910. Ausgehend von den distalen Öffnungen 912, 914 des Gegenlagerabschnitts verjüngt sich der Aufnahmekanal zur Aufnahme des Schlauchabschnitts hin zur Gegenfläche 910.

Das Kompressor-Gegenlager-Paar 904 umfasst den halbsphärischen Kompressor 40. Der Gegenlagerabschnitt 30 umfasst den sich entlang der Schlauchachse T erstreckenden einer Zylinderinnenfläche folgenden Aufnahmekanal.

Das Kompressor-Gegenlager-Paar 906 umfasst einen keilartig ausgebildeten Kompressor 40 und einen keilartig ausgebildeten Gegenlagerabschnitt 30. Der Kompressor 40 und der Gegenlagerabschnitt 30 führen zu einer guillotinenartigen Abklemmung des Schlauchabschnitts, was bedeutet, dass die Klemmung im Wesentlichen lotrecht zur Schlauchachse T erfolgt.

## Patentansprüche

1. Ein Quetschventil (2), welches umfasst:
einen Grundkörper (10) mit einem Aufnahmeraum (12) für einen Schlauchabschnitt, wobei der Grundkörper (10) eine laterale Öffnung (14), die in den Aufnahmeraum (12) führt, umfasst, wobei die laterale Öffnung (14) lateral zu einer Stellachse (S) angeordnet ist;
einen entlang der Stellachse (S) beweglichen Kompressor (40); und
ein am Grundkörper (10) beweglich befestigtes Verschlusselement (20), welches einen Gegenlagerabschnitt (30) für den Kompressor (40) bereitstellt, und welches relativ zu dem Grundkörper (10) zwischen einer ersten Position, in der das Verschlusselement (20) die laterale Öffnung (14) des Grundkörpers (10) zumindest abschnittsweise verschließt, und einer zweiten Position, in der das Verschlusselement (20) eine Einbringöffnung (22) für den Schlauchabschnitt freigibt, beweglich ist,
wobei das Verschlusselement (20) um eine Rotationsachse (R) rotierbar an dem Grundkörper (10) befestigt ist, oder
das Verschlusselement (20) schubladenartig ausgeführt ist und einen Führungsabschnitt (602) umfasst, der in einem diesen aufnehmenden Führungsabschnitt des Grundkörpers (10) aufgenommen ist, sodass das Verschlusselement (10) linear geführt ist.

2. Das Quetschventil (2) gemäß der ersten Alternative von Anspruch 1, wobei das Verschlusselement (20) um eine Rotationsachse (R) rotierbar an dem Grundkörper (10) befestigt ist, wobei die Rotationsachse (R) lotrecht und beabstandet zu der Stellachse (S) verläuft, sodass der Schlauchabschnitt lotrecht zur Stellachse (S) entnehmbar und/oder zuführbar ist, wobei ein Öffnungswinkel zwischen der ersten und der zweiten Position des Verschlusselements (20) auf einen Bereich zwischen 40° und 80°, insbesondere auf einen Bereich zwischen 50° und 60°, begrenzt ist.

3. Das Quetschventil (2) gemäß einem der vorigen Ansprüche, wobei das Verschlusselement (20) und/oder der Gegenlagerabschnitt (30) wenigstens einen Anschlagbereich (24) zur Begrenzung einer Bewegung des Kompressors (40) entlang der Stellachse (S) und in Richtung des Gegenlagerabschnitts (30) umfasst.

4. Das Quetschventil (2) gemäß einem der vorigen Ansprüche, wobei das Verschlusselement (20) lösbar mit dem Grundkörper (10) verbunden ist.

5. Das Quetschventil (2) gemäß einem der vorigen Ansprüche, wobei der Gegenlagerabschnitt (30) und das Verschlusselement (20) einstückig ausgebildet sind.

6. Das Quetschventil (2) gemäß einem der Ansprüche 1 bis 4, wobei der Gegenlagerabschnitt (30) lösbar mit dem Verschlusselement (20) verbunden ist.

7. Das Quetschventil (2) gemäß einem der vorigen Ansprüche, wenn sie sich auf die erste Alternative des Anspruchs 1 beziehen, wobei das Verschlusselement (20) um eine Rotationsachse (R) rotierbar an dem Grundkörper (10) befestigt ist, wobei die Rotationsachse (R) lotrecht und beabstandet zu der Stellachse (S) verläuft, sodass der Schlauchabschnitt lotrecht zur Stellachse (S) entnehmbar und/oder zuführbar ist, wobei eine dem Gegenlagerabschnitt (30) gegenüberliegende Anlagekontur (26) des Verschlusselements (20) und eine innere Anlagekontur (16) des Grundkörpers (10) aneinander anliegen, wenn sich das Verschlusselement (20) in der ersten Position befindet.

8. Das Quetschventil (2) gemäß einem der vorigen Ansprüche, wobei ein an dem Grundkörper (10) beweglich befestigtes Verriegelungselement (50) relativ zum Grundkörper (10) zwischen einer Freigabeposition, in der das Verriegelungselement (50) eine Bewegung des Verschlusselements (20) in dessen zweite Position erlaubt, und einer Verriegelungsposition, in der das Verrieglungselement (50) eine Bewegung des Verschlusselements (20) aus dessen erster Position heraus begrenzt, beweglich ist.

9. Das Quetschventil (2) gemäß dem Anspruch 8, wobei das Verriegelungselement (50) um die Stellachse (S) rotierbar gelagert ist, wobei ein Kragen (52) des Verriegelungselements (50) in der Verriegelungsposition einen distalen Abschnitt (28) des Verschlusselements (20) festlegt, und wobei eine Ausnehmung (54) des Kragens (52) des Verriegelungselements (50) in der Freigabeposition den distalen Abschnitt (28) des Verschlusselements (20) zur Bewegung des Verschlusselements (20) in die zweite Position freigibt.

10. Das Quetschventil (2) gemäß einem der vorigen Ansprüche, wobei der Kompressor (40) lösbar an einer sich entlang der Stellachse (S) erstreckenden Ventilstange (42) befestigt ist.

11. Das Quetschventil (2) gemäß einem der vorigen Ansprüche, wobei ein Befestigungsabschnitt (60) des Grundkörpers (10) sich radial außerhalb einer Durchgangsöffnung (62) für die bzw. eine Ventilstange (42) befindet.

12. Das Quetschventil (2) gemäß einem der vorigen Ansprüche, wenn sie sich auf die erste Alternative des Anspruchs 1 beziehen, wobei das Verschlusselement (20) um eine Rotationsachse (R) rotierbar an dem Grundkörper (10) befestigt ist, wobei die Rotationsachse (R) lotrecht und beabstandet zu der Stellachse (S) verläuft, sodass der Schlauchabschnitt lotrecht zur Stellachse (S) entnehmbar und/oder zuführbar ist, wobei der Gegenlagerabschnitt (30) in einer Öffnung mündet, welche einen kleineren Durchmesser (32) hat als ein Innendurchmesser (34) des Gegenlagerabschnitts (30).

## Claims

1. Pinch valve (2) comprising:
a main body (10) having a receiving space (12) for a tube portion, wherein the main body (10) comprises a lateral opening (14) which leads into the receiving space (12), wherein the lateral opening (14) is arranged laterally with respect to an adjusting axis (S);
a compressor (40) which is movable along the adjusting axis (S); and
a closure element (20) which is movably fastened to the main body (10) and provides a counter-bearing portion (30) for the compressor (40), and which is movable relative to the main body (10) between a first position, in which the closure element (20) closes the lateral opening (14) of the main body (10), at least in portions, and a second position, in which the closure element (20) releases an introduction opening (22) for the tube portion, wherein the closure element (20) is fastened to the main body (10) so as to be rotatable about an axis of rotation (R), or
the closure element (20) is designed like a drawer and comprises a guide portion (602) which is received in a guide portion of the main body (10) that receives said guide portion, so that the closure element (10) is guided linearly.

2. Pinch valve (2) according to the first alternative of claim 1, wherein the closure element (20) is fastened to the main body (10) so as to be rotatable about a rotation axis (R), wherein the rotation axis (R) extends perpendicularly and at a distance from the adjusting axis (S), so that the tube portion can be removed and/or supplied perpendicularly to the adjusting axis (S), wherein an opening angle between the first and the second position of the closure element (20) is limited to a range between 40° and 80°, in particular to a range between 50° and 60°.

3. Pinch valve (2) according to any of the preceding claims, wherein the closure element (20) and/or the counter-bearing portion (30) comprises at least one stop region (24) for limiting a movement of the compressor (40) along the adjusting axis (S) and in the direction of the counter-bearing portion (30).

4. Pinch valve (2) according to any of the preceding claims, wherein the closure element (20) is detachably connected to the main body (10).

5. Pinch valve (2) according to any of the preceding claims, wherein the counter-bearing portion (30) and the closure element (20) are integrally formed.

6. Pinch valve (2) according to any of claims 1 to 4, wherein the counter-bearing portion (30) is detachably connected to the closure element (20).

7. Pinch valve (2) according to any of the preceding claims, when they relate to the first alternative of claim 1, wherein the closure element (20) is fastened to the main body (10) so as to be rotatable about an axis of rotation (R), wherein the rotation axis (R) extends perpendicularly and at a distance from the adjusting axis (S), so that the tube portion can be removed and/or supplied perpendicularly to the adjusting axis (S), wherein a contact contour (26) of the closure element (20) opposite the counter-bearing portion (30) and an inner contact contour (16) of the main body (10) abut one another when the closure element (20) is in the first position.

8. Pinch valve (2) according to any of the preceding claims, wherein a locking element (50), which is movably fastened to the main body (10), is movable relative to the main body (10) between a release position, in which the locking element (50) allows the closure element (20) to move to the second position thereof, and a locking position, in which the locking element (50) limits a movement of the closure element (20) out of the first position thereof.

9. Pinch valve (2) according to claim 8, wherein the locking element (50) is mounted so as to be rotatable about the adjusting axis (S), wherein a collar (52) of the locking element (50) fixes a distal portion (28) of the closure element (20) in the locking position, and wherein a recess (54) in the collar (52) of the locking element (50), in the release position, releases the distal portion (28) of the closure element (20) to move the closure element (20) into the second position.

10. Pinch valve (2) according to any of the preceding claims, wherein the compressor (40) is detachably fastened to a valve rod (42) extending along the adjusting axis (S).

11. Pinch valve (2) according to any of the preceding claims, wherein a fastening portion (60) of the main body (10) is located radially outside of a through-opening (62) for the or a valve rod (42).

12. Pinch valve (2) according to any of the preceding claims, when they relate to the first alternative of claim 1, wherein the closure element (20) is fastened to the main body (10) so as to be rotatable about an axis of rotation (R), wherein the rotation axis (R) extends perpendicularly and at a distance from the adjusting axis (S), so that the tube portion can be removed and/or supplied perpendicularly to the adjusting axis (S), wherein the counter-bearing portion (30) opens into an opening which has a smaller diameter (32) than an inner diameter (34) of the counter-bearing portion (30).

## Revendications

1. Robinet-vanne à manchon déformable (2), lequel comprend :
un corps formant base (10) comportant un espace de réception (12) pour une section formant tuyau, dans lequel le corps formant base (10) comprend une ouverture latérale (14) qui mène dans l'espace de réception (12), dans lequel l'ouverture latérale (14) est disposée latéralement par rapport à un axe de réglage (S) ;
un compresseur (40) pouvant se déplacer le long de l'axe de réglage (S) ; et
un élément de fermeture (20) fixé de manière à pouvoir se déplacer sur le corps formant base (10), lequel élément de fermeture fournit une section formant palier-support (30) pour le compresseur (40) et peut se déplacer par rapport au corps formant base (10) entre une première position dans laquelle l'élément de fermeture (20) ferme au moins dans certaines sections l'ouverture latérale (14) du corps formant base (10), et une seconde position dans laquelle l'élément de fermeture (20) libère une ouverture d'insertion (22) pour la section formant tuyau, dans lequel l'élément de fermeture (20) est fixé au corps formant base (10) de manière à pouvoir tourner autour d'un axe de rotation (R), ou
l'élément de fermeture (20) est conçu à la manière d'un tiroir et comprend une section de guidage (602) qui est reçue dans une section de guidage du corps formant base (10) qui la reçoit, de sorte que l'élément de fermeture (10) est guidé de manière linéaire.

2. Robinet-vanne à manchon déformable (2) selon la première alternative de la revendication 1, dans lequel l'élément de fermeture (20) est fixé au corps formant base (10) de manière à pouvoir tourner autour d'un axe de rotation (R), dans lequel l'axe de rotation (R) s'étend perpendiculairement et à distance de l'axe de réglage (S), de sorte que la section formant tuyau peut être retirée et/ou amenée perpendiculairement à l'axe de réglage (S), dans lequel un angle d'ouverture entre la première et la seconde position de l'élément de fermeture (20) est limité à une plage comprise entre 40° et 80°, en particulier à une plage comprise entre 50° et 60°.

3. Robinet-vanne à manchon déformable (2) selon l'une des revendications précédentes, dans lequel l'élément de fermeture (20) et/ou la section formant palier-support (30) comprennent au moins une zone formant butée (24) permettant de limiter un déplacement du compresseur (40) le long de l'axe de réglage (S) et en direction de la section formant palier-support (30).

4. Robinet-vanne à manchon déformable (2) selon l'une des revendications précédentes, dans lequel l'élément de fermeture (20) est relié de manière amovible au corps formant base (10).

5. Robinet-vanne à manchon déformable (2) selon l'une des revendications précédentes, dans lequel la section formant palier-support (30) et l'élément de fermeture (20) sont réalisés d'une seule pièce.

6. Robinet-vanne à manchon déformable (2) selon l'une des revendications 1 à 4, dans lequel la section formant palier-support (30) est reliée de manière amovible à l'élément de fermeture (20).

7. Robinet-vanne à manchon déformable (2) selon l'une des revendications précédentes, lorsqu'elles se rapportent à la première alternative de la revendication 1, dans lequel l'élément de fermeture (20) est fixé au corps formant base (10) de manière à pouvoir tourner autour d'un axe de rotation (R), dans lequel l'axe de rotation (R) s'étend perpendiculairement et à distance de l'axe de réglage (S), de sorte que la section formant tuyau peut être retirée et/ou amenée perpendiculairement à l'axe de réglage (S), dans lequel un contour d'appui (26) de l'élément de fermeture (20) opposé à la section formant palier-support (30) et un contour d'appui intérieur (16) du corps formant base (10) sont en contact l'un avec l'autre lorsque l'élément de fermeture (20) est situé dans la première position.

8. Robinet-vanne à manchon déformable (2) selon l'une des revendications précédentes, dans lequel un élément de verrouillage (50) fixé de manière à pouvoir se déplacer sur le corps formant base (10) peut se déplacer par rapport au corps formant base (10) entre une position de libération dans laquelle l'élément de verrouillage (50) permet un déplacement de l'élément de fermeture (20) vers sa seconde position, et une position de verrouillage dans laquelle l'élément de verrouillage (50) limite un déplacement de l'élément de fermeture (20) hors de sa première position.

9. Robinet-vanne à manchon déformable (2) selon la revendication 8, dans lequel l'élément de verrouillage (50) est monté rotatif autour de l'axe de réglage (S), dans lequel une collerette (52) de l'élément de verrouillage (50) fixe une section distale (28) de l'élément de fermeture (20) dans la position de verrouillage, et dans lequel un évidement (54) de la collerette (52) de l'élément de verrouillage (50) libère la section distale (28) de l'élément de fermeture (20) dans la position de libération pour le déplacement de l'élément de fermeture (20) dans la seconde position.

10. Robinet-vanne à manchon déformable (2) selon l'une des revendications précédentes, dans lequel le compresseur (40) est fixé de manière amovible à une tige de robinet-vanne (42) s'étendant le long de l'axe de réglage (S).

11. Robinet-vanne à manchon déformable (2) selon l'une des revendications précédentes, dans lequel une section de fixation (60) du corps formant base (10) est située radialement à l'extérieur d'une ouverture de passage (62) pour la tige de robinet-vanne (42) ou une tige de robinet-vanne.

12. Robinet-vanne à manchon déformable (2) selon l'une des revendications précédentes, lorsqu'elles se rapportent à la première alternative de la revendication 1, dans lequel l'élément de fermeture (20) est fixé au corps formant base (10) de manière à pouvoir tourner autour d'un axe de rotation (R), dans lequel l'axe de rotation (R) s'étend perpendiculairement et à distance de l'axe de réglage (S), de sorte que la section formant tuyau peut être retirée et/ou amenée perpendiculairement à l'axe de réglage (S), dans lequel la section formant palier-support (30) débouche dans une ouverture qui possède un diamètre (32) plus petit qu'un diamètre intérieur (34) de la section formant palier-support (30).
